# EUROPEAN PATENT SPECIFICATION

(11) **EP 3 446 018 B1**
(45) Date of publication and mention of the grant of the patent: **11.03.2020**
(21) Application number: 17703694.4
(22) Date of filing: 31.01.2017
(51) Int. Cl.: F16L 55/027, E03C 1/08, F16L 37/084, F16L 15/00

(54) **TAP CONNECTOR WITH FLOW STABILIZATION**
HAHNANSCHLUSS MIT DURCHFLUSSSTABILISIERUNG
RACCORD DE ROBINET À STABILISATION DE FLUX

(30) Priority: 21.04.2016 DE 102016004809
(43) Date of publication of application: 27.02.2019
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2017/052035
(87) International publication number: WO 2017/182147

(56) References cited:
- DE-U1-202008 017 031
- FR-A5- 2 072 696
- GB-A- 1 167 680
- US-A- 3 321 140

## Description

The present invention relates generally to the field of tap connectors. More specifically, the present document discloses a tap connector comprising means for reducing liquid turbulences.

### BACKGROUND OF THE INVENTION

Tap connectors for enabling a quick coupling of a hose with a water tap are known in prior art. For example, document GB 1,167,680 A discloses a hose coupling comprising an inner male member and an outer female member, the inner, male member being adapted to be inserted into the outer, female member. The outer female member comprises locking means in order to establish a detachable connection between the inner member and the outer member.
DE 20 2008 017031 U1 describes a flow controller that can be inserted into a watering element to adjust the amount water flowing through according the original water pressure. This is achieved by two elements acting together resulting in constant flow in a way that the through holes of a sieve the water flows and a sealing ring acting on that sieve. The sealing ring changes its shape as a function of water pressure acting on it. Thus the higher the original water pressure the more the sealing ring gets deformed and by this the less through holes are available. To allow for a water tight insertion into a watering element various components of the central element are inserted into a soft sealing member then forming the outer side of the flow controller. In a much similar manner the pressure regulator shown with FR 2 072 696 A5 also works with the help of the interaction of two elements. That is the sieve like element RD whose openings can be closed a elastically deformable FD, depended on the water pressure acting on FD.

In order to couple a hose with a tap, the inner, male member is arranged at the outlet of the tap. In case that no hose is coupled with said inner, male member, e.g. for directly providing water from the tap into a watering can, the water does not form a uniform water jet but the water sprays out of the tap. Said spraying of water is mainly caused by a valve included in the tap.

### SUMMARY OF THE INVENTION

It is an objective of the embodiments of the present invention to provide a tap connector which stabilizes the liquid flow in order to avoid splashing of water in case that no hose is coupled with the tap connector. The objective is solved by the features of the independent claim. Preferred embodiments are given in the dependent claims.

Said tap connector is advantageous because, based on the bars of the sealing element, a silencing of liquid turbulences is achieved which leads to a uniform liquid stream at the outlet of the tap connector. By integrating one or more bars into the sealing element, the sealing element can not only be used for providing a fluid-tight sealing between the tap and the tap connector but the sealing element also provides means for silencing the liquid stream in order to avoid undesired splashing of water at the fluid outlet of the tap connector.
According to embodiments, the sealing element is adapted to be supported by an annular portion, said annular portion connecting the first coupling portion with the second coupling portion. The sealing area of the sealing element may rest on said annular portion in order to provide a sealed arrangement of the tap connector at the tap.
According to embodiments, the sealing element comprises the same height in the fluid passage area and the sealing area. In other words, the sealing element may be a disc-shaped flat seal.

According to other embodiments, the sealing element comprises a stepped shape wherein the fluid passage area comprises a greater height than the sealing area. For example, the sealing area may at least partially protrude downwardly (in the direction of the fluid outlet) from the sealing area. Thereby, the height of the fluid passage area is increased which leads to a greater interaction length between the bars and the fluid flowing through the sealing element. As a result, the silencing effect can be significantly increased.

According to embodiments, the sealing element comprises a collar, said collar surrounding the fluid passage area and protruding towards the fluid outlet. Said collar may form an annular wall protruding downwardly. Based on said collar, the height of a sealing element wall laterally confining the fluid passage area is increased. Said collar is advantageous because the height of the bars can be increased and the stiffness of the bars is increased.

According to embodiments, said one or more bars protrude laterally from a sealing element wall, said sealing element wall circumferentially confining the fluid passage area. Said bars may be integrally formed at said sealing element wall.

According to embodiments, said one or more bars comprise a planar shape. For example, multiple planar-shaped bars may protrude laterally from a sealing element wall forming a star-shaped bar configuration.

According to embodiments, the sealing element comprises two or more bars, said bars being evenly distributed across the circumference of the fluid passage area. By means of said distributed bars, the fluid passage area is at least partially segmented which leads to a silencing of liquid flowing through the fluid channel.
According to embodiments, the one or more bars protrude radially from a sealing element wall confining the fluid passage area. In other words, a bar and a tangent at the origin of said bar confine a right angle.
According to other embodiments, the one or more bars protrude from a sealing element wall confining the fluid passage area such that the bar and a tangent at the origin of said bar confine an acute angle.
According to embodiments, the one or more bars comprise a width smaller than the radius of the fluid passage area. According to other embodiments, the one or more bars protrude radially from a sealing element wall confining the fluid passage area and are coupled in the centre of said fluid passage area.
According to embodiments, said bars form a grid or honeycomb-like structure in the fluid passage area. By means of said grid or honeycomb-like structure, liquid guiding tubes may be formed in the fluid passage area, said liquid guiding tubes improving the silencing of the liquid flow at the liquid outlet.

According to the invention, said sealing element is an integrally-formed sealing element. The sealing element may be manufactured using a 1K-manufacturing process or a 2K-manufacturing process. Using a 1K-manufacturing process, the bars as well as the sealing element portion in the sealing area may comprise an elastic material. Using a 2K-manufacturing process, the bars may comprise a stiffer material than the sealing element portion in the sealing area.

According to the invention, said sealing element is an injection-moulded or a punched element. Thereby, a manufacturing of the sealing element at reasonable costs is possible.
The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: illustrates a sectional view of a tap connector according to prior art;
- Fig. 2: illustrates an opened water tap with a tap connector according to Fig. 1;
- Fig. 3: illustrates a first example embodiment of a tap connector with a sealing element in a sectional view;
- Fig. 4: illustrates an opened water tap with a tap connector according to Fig. 3;
- Fig. 5: illustrates a second example embodiment of a tap connector comprising said sealing element in a sectional view;
- Fig. 5a: illustrates the sealing element according to the second example embodiment of Fig. 5 in a perspective view;
- Fig. 6: illustrates a third example embodiment of a tap connector with a sealing element in a sectional view; and
- Fig. 7: illustrates a fourth example embodiment of a tap connector with a sealing element in a sectional view.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

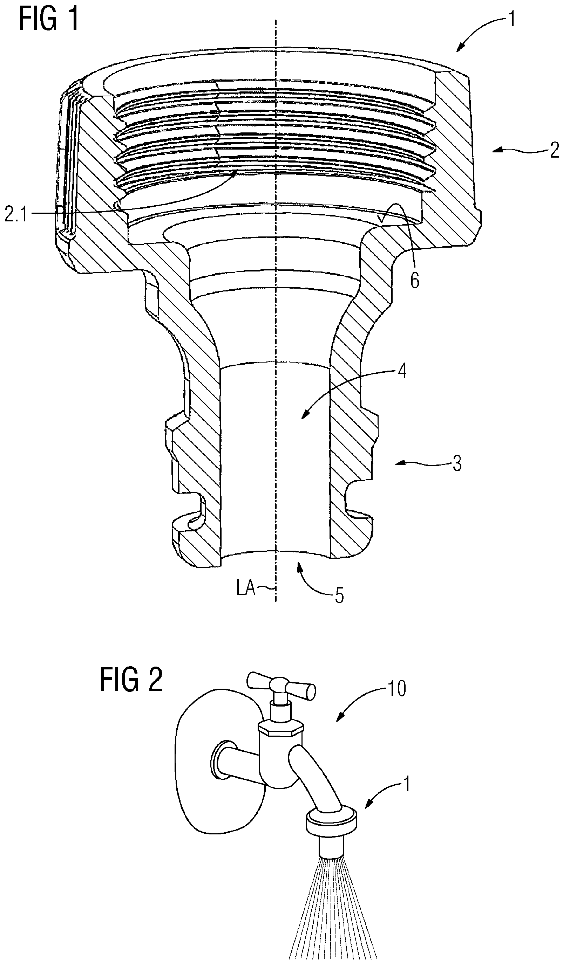

Fig. 1 illustrates a sectional view of a tap connector 1 according to prior art. The tap connector comprises a first and a second coupling portion 2, 3. The first coupling portion 2 is configured to detachably connect the tap connector 1 with an outlet of a tap. More in detail, the first coupling portion 2 may comprise an annular shape with a female thread 2.1 for enabling the tap connector 1 to be screwed on a corresponding male thread of the tap.

The second coupling portion 3 is adapted to be inserted in a corresponding hose connector in order to establish a detachable connection between the tap connector 1 and said hose connector. The second coupling portion 3 may comprise an essentially tubular shape. The contours at the outer coupling portion wall are adapted to enable said detachable connection between the tap connector 1 and said hose connector. The second coupling portion 3 confines a fluid channel 4 through which a fluid provided by the tap is guided to a fluid outlet 5 arranged at the free end of the second coupling portion 3.

The first coupling portion 2 is connected with the second coupling portion 3 via an annular portion 6, said annular portion 6 providing a sealing surface in order to provide a fluid-tight connection between the tap and the tap connector 1. For example, said annular portion may form a contact surface for a sealing element.

Fig. 2 shows a tap 10 with a tap connector 1 arranged at the outlet of the tap 10 (without any hose coupled with the tap connector). In the opened state of the tap 10, liquid is dispensed, wherein the liquid jet comprise a spray cone-like shape. In other words, the liquid jet is not focussed but the liquid is dispensed in a downwardly expanding fashion. Said unfocussed provision of liquid is mainly caused by turbulences arising within the tap 10 in the area of a tap valve. For example, the tap 10 may comprise a ball valve, said ball valve inducing turbulences which cause a spray cone-like liquid dispension. Such spray cone-like liquid dispension has detrimental effects because cans or buckets can not be filled without splashing of water.

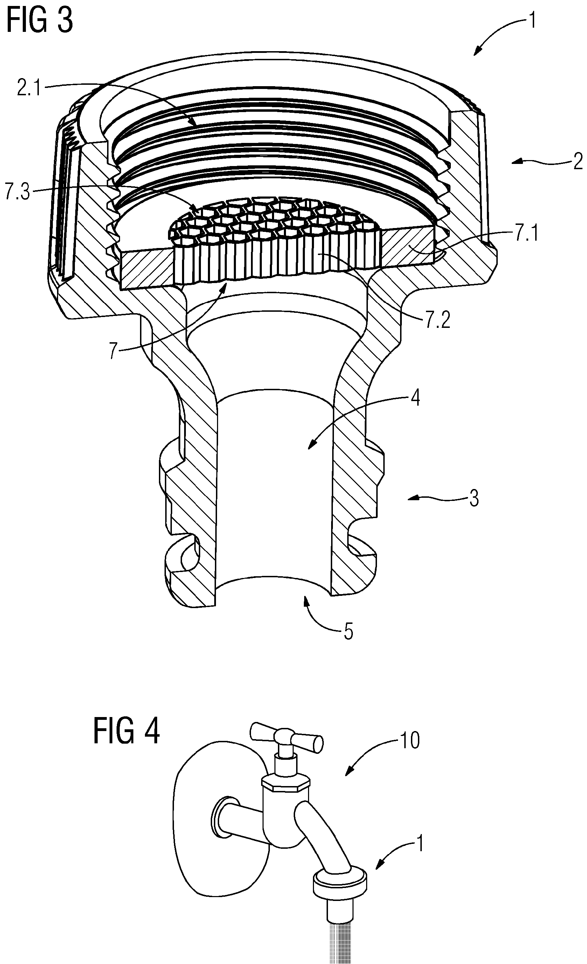

Fig. 3 shows a sectional view of an embodiment of a tap connector 1. The tap connector 1 of fig. 3 essentially comprises similar features as the tap connector of fig. 1. Therefore, in the following only additional features of the tap connector 1 of fig. 3 are explained. Apart from that, the afore-mentioned features of fig. 1 are also valid for the embodiments of fig. 3 and fig. 5 - 7. The main difference of the tap connector 1 according to the embodiments of fig. 3 and fig. 5 - 7 with respect to the tap connector of fig. 1 is that a sealing element 7 is arranged in the interior of the first coupling portion 2. Said sealing element 7 comprises an annular sealing area 7.1 and a fluid passage area 7.2 surrounded by said annular sealing area 7.1.

The annular sealing area 7.1 may be adapted to be supported by the annular portion 6 of the tap connector 1. The diameter of the sealing element 7 may be chosen such that the sealing element is positively received within the inner space of the first coupling portion 2.

Said fluid passage area 7.2 comprises multiple bars 7.3, in the present embodiment a grid-like or honeycomb-like bar structure configured to silence the flow of the liquid in order to reduce splashing of liquid provided at the fluid outlet 5. In other words, a focussed liquid beam is provided at the liquid outlet 5 based on said sealing element 7 (cf. fig. 4).

More in detail, the sealing element 7 comprises a disk-like shape, i.e. may be a flat sealing element 7 which ensures - based on the annular sealing area 7.1 - that the tap connector 1 can be coupled with the tap 10 in a fluid-tight way. In addition, based on the plurality of bars 7.3 in the fluid passage area 7.2, the liquid is guided through the sealing element 7 which reduces disturbances in the liquid stream and focuses the liquid beam at the liquid outlet 5. Due to said grid-like or honeycomb-like bar structure, a plurality of liquid pipes are formed within the sealing element 7. Said liquid pipes may have a polygonal or hexagonal cross section. The opening width may be, for example, in the range of 0.5mm to 5mm, specifically 1mm, 2mm, 3mm or 4mm. Based on said liquid pipes, the disturbances in the liquid stream can be further reduced.

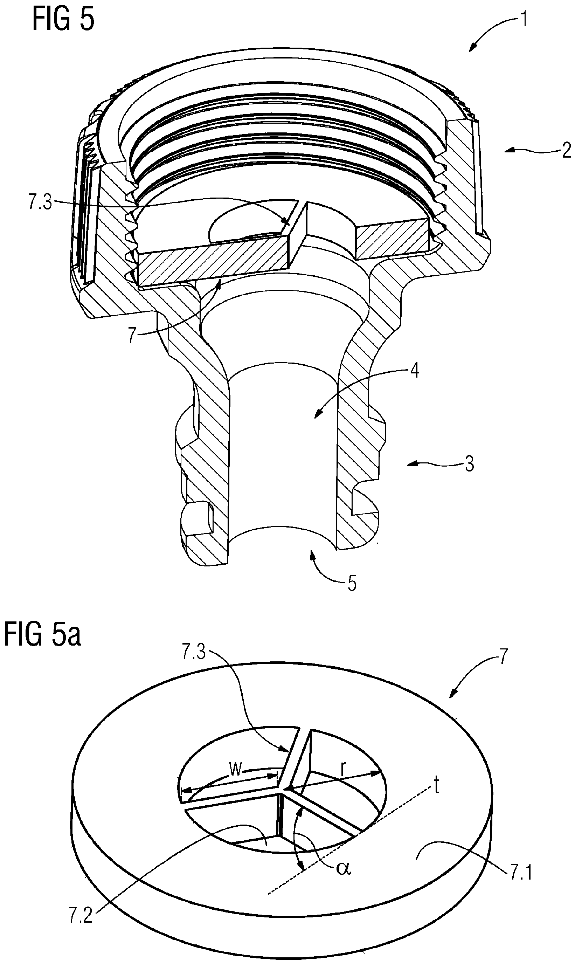

Fig. 5 and 5a show a further embodiment of a sealing element 7 to be included in a tap connector 1. Similar to the embodiment of Fig. 3, the sealing element 7 is a flat seal with a disk-like shape. In the fluid passage area 7.2, one or more bars 7.3 are included which extend from a sealing element wall 7.5 into the centre of the fluid passage area 7.2. In other words, the longitudinal axes of said bars 7.3 may extend perpendicular to the longitudinal axis LA of the fluid channel 4. According to embodiments, the bars 7.3 are integrally formed at said sealing element wall 7.5. Said bars 7.3 may be planar ribs, each rib comprising a cuboid shape. In the present embodiment, the bars 7.3 protrude radially from the sealing element wall 7.5, i.e. a bar 7.3 and a tangent t through the origin of said bar 7.3 confines an angle of 90°.

According to embodiments, multiple bars 7.3 may be equally distributed around the circumference of the fluid passage area 7.2. For example, the sealing element 7 may comprise three equally distributed bars 7.3. However, according to other embodiments, also more or less bars 7.3 may be possible. Thereby, the fluid passage area 7.2 is segmented in multiple fluid passage portions which further reduce liquid turbulences. The width w of the bars 7.3 is equal to the radius r of the fluid passage area 7.2. As such, the bars 7.3 meet in the centre of the fluid passage area 7.2 thereby forming a star-shaped bar arrangement within the fluid passage area 7.2. Preferably, the bars 6 are coupled in the centre of the fluid passage area 7.2.

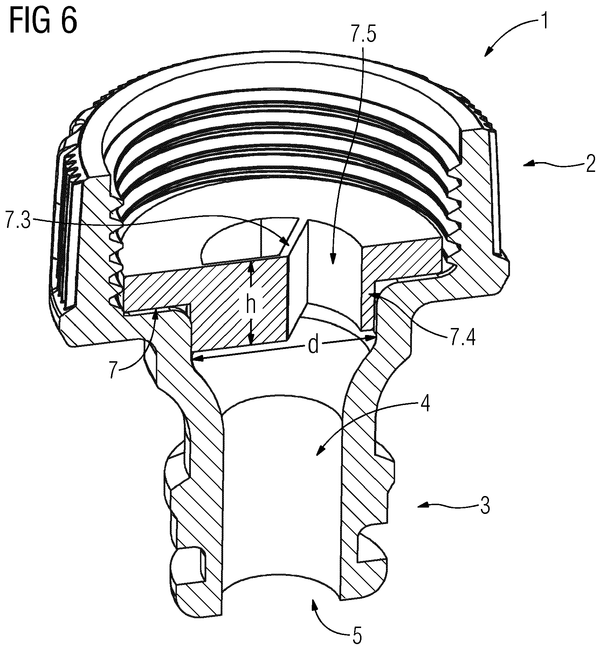

Fig. 6 shows yet a further embodiment of a sealing element 7 to be included in a tap connector 1. The sealing element 7 of fig. 6 essentially comprises similar features as the sealing element 7 of fig. 5. Therefore, in the following only additional features of the sealing element 7 of fig. 6 are explained. Apart from that, the afore-mentioned features of fig. 5 are also valid for the embodiment of fig. 6. The main difference of the sealing element 7 according to the embodiment of fig. 6 with respect to the sealing element 7 of fig. 5 is that the sealing element 7 comprises a stepped shape. In other words, the height of the sealing element in the sealing area 7.1 and the fluid passage area 7.2 is different. According to the present embodiment, the height h of the fluid passage area 7.2 may be greater than the height h of the sealing area 7.1. For example, the sealing element comprises a collar 7.4 protruding downwardly from the annular sealing area 7.1. Said collar 7.4 may comprise an annular shape and may surround the fluid passage area 7.2. In other words, the collar 7.4 may form a rim around the fluid passage area 7.2. Based on said collar 7.4, the height h of the fluid passage area 7.2 is increased. Thereby, also the height of the bars 7.3 can be increased which preferably comprise the same height h than said collar 7.4. As a result, the length in which the fluid is guided by means of said bars 7.3 is increased which leads to an improved focussing of the liquid flow. In addition, due to the greater height, the stability of the bars 7.3 is significantly enhanced.

The outer diameter d of the collar 7.4 may be chosen such that said collar 7.4 is positively insertable in the fluid channel 4 provided in the second coupling portion 3 close to the annular portion 6. In other words, the collar 7.4 is form-fitted to the fluid channel 4 in order to fix the sealing element 7 within the tap connector 1.

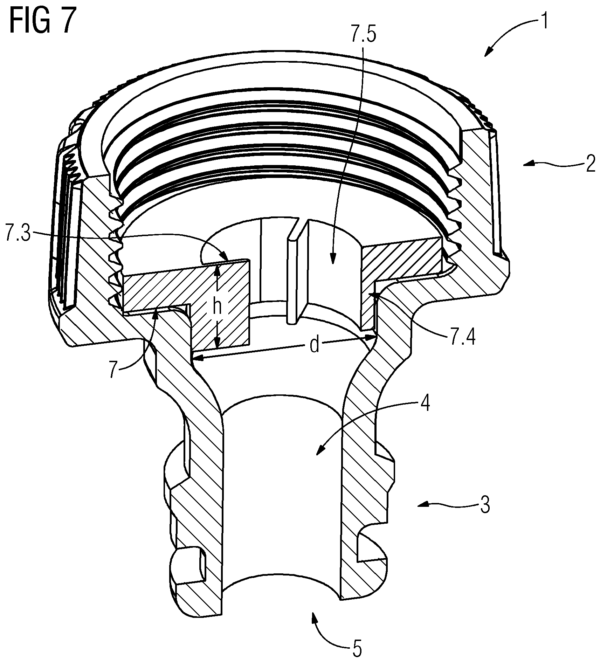

Fig. 7 shows yet a further embodiment of a sealing element 7 to be included in a tap connector 1. The sealing element 7 of fig. 7 essentially comprises similar features as the sealing element 7 of fig. 6. Therefore, in the following only additional features of the sealing element 7 of fig. 7 are explained. Apart from that, the afore-mentioned features of fig. 6 are also valid for the embodiment of fig. 7. The main difference of the sealing element 7 according to the embodiment of fig. 7 with respect to the sealing element 7 of fig. 6 is that the bars 7.3 do not meet in the centre of the fluid passage area 7.2 but the bars 7.3 are extending radially towards the centre of the fluid channel 4 and the width w of the bars 7.3 is smaller than the radius r of the fluid passage area 7.2. As such, the centre of the fluid passage area 7.2 is free from any bars 7.3. For example the width w of the bars 7.3 may be in region between 0.5*r ≤ w < r.

According to other embodiments, the sealing element 7 may comprise slanted bars 7.3. In other words, the bars 7.3 do not protrude radially from the sealing element wall 7.5 but the bars 7.3 and a tangent t at the origin of the bar 7.3 may confine an acute angle α (α < 90°). According to embodiments, the angle α may be smaller than 60° (α < 60°). The width w of the bars 7.3 may be smaller than the radius r of the fluid passage area 7.2. For example, the width w of the bars 7.3 may be in region 0.5*r ≤ w < r.
The sealing element 7 may be made of an elastomer by injection moulding or by a punching process. The bars 7.3 may be made from the same material than the annular material portion in the sealing area 7.1. However, the bars 7.3 can also be made of a more rigid material, e.g. manufactured in a 2K (two-component) process, whereas the annular material portion in the sealing area 7.1 is made of a 1K (one-component) process.
It should be noted that the description and drawings merely illustrate the principles of the proposed tap connector. Those skilled in the art will be able to implement various arrangements that, although not explicitly described or shown herein, embody the principles of the invention as defined by the claims.

### List of reference numerals

- 1: tap connector
- 2: first coupling portion
- 2.1: female thread
- 3: second coupling portion
- 4: fluid channel
- 5: fluid outlet
- 6: annular portion
- 7: sealing element
- 7.1: sealing area
- 7.2: fluid passage area
- 7.3: bar
- 7.4: collar
- 7.5: sealing wall element

- 10: tap

- α: angle
- d: diameter
- h: height
- LA: longitudinal axis
- r: radius
- t: tangent
- w: width

## Claims

1. Tap connector comprising a first coupling portion (2) adapted to couple the tap connector (1) with a tap (10) and a second coupling portion (3) forming a fluid outlet (5), said second coupling portion (3) being adapted to receive a hose connector, wherein a sealing element (7) is provided within the first coupling portion (2) in order to obtain a liquid-tight connection between the tap connector (1) and a tap (10), whereby the sealing element (7) comprises a sealing area (7.1) and a fluid passage area (7.2) including one or more bars (7.3), said bars (7.3) segmenting said fluid passage area (7.2) in order to provide a focussed liquid stream at the fluid outlet (5),
**characterized in that**
said sealing element (7) is an integrally-formed sealing element being an injection-moulded or a punched element.

2. Tap connector according to claim 1, wherein the sealing element (7) is manufactured using a 1K-manufacturing process, whereby the bars (7.3) as well as the sealing element portion in the sealing area (7.1) comprises an elastic material.

3. Tap connector according to claim 1, wherein the sealing element (7) is manufactured using a 2K-manufacturing process, whereby the bars (7.3) comprise a stiffer material than the sealing element portion in the sealing area (7.1).

4. Tap connector according to anyone of the preceding claims, wherein the sealing element (7) is adapted to be supported by an annular portion (6), said annular portion (6) connecting the first coupling portion (2) with the second coupling portion (3).

5. Tap connector according to anyone of the preceding claims, wherein the sealing element (7) comprises the same height in the fluid passage area (7.2) and the sealing area (7.1).

6. Tap connector according to anyone of the claims 1 to 4, wherein the sealing element (7) comprises a stepped shape, the fluid passage area (7.2) comprising a greater height than the sealing area (7.1).

7. Tap connector according to anyone of the preceding claims, wherein the sealing element (7) comprises a collar (7.4), said collar (7.4) surrounding the fluid passage area (7.2) and protruding towards the fluid outlet (5).

8. Tap connector according to anyone of the preceding claims, wherein said one or more bars (7.3) protrude laterally from a sealing element wall (7.6), said sealing element wall (7.6) circumferentially confining the fluid passage area (7.2).

9. Tap connector according to anyone of the preceding claims, wherein said one or more bars (7.3) comprise a planar shape.

10. Tap connector according to anyone of the preceding claims, said sealing element (7) comprising two or more bars (7.3), said bars (7.3) being evenly distributed across the circumference of the fluid passage area (7.2).

11. Tap connector according to anyone of the preceding claims, wherein the one or more bars (7.3) protrude radially from a sealing element wall (7.5) confining the fluid passage area (7.2) .

12. Tap connector according to anyone of the preceding claims 1 to 10, wherein the one or more bars (7.3) protrude from a sealing element wall (7.5) confining the fluid passage area (7.2) such that the bar (7.3) and a tangent (t) at the origin of said bar (7.3) confine an acute angle (α).

13. Tap connector according to anyone of the preceding claims, wherein the one or more bars (7.3) comprise a width (w) smaller than the radius (r) of the fluid passage area (7.2).

14. Tap connector according to anyone of the preceding claims 1 to 11, wherein the one or more bars (7.3) protrude radially from a sealing element wall (7.5) confining the fluid passage area (7.2) and are coupled in the centre of said fluid passage area (7.2).

15. Tap connector according to anyone of the claims 1 to 8, wherein said bars (7.3) form a grid or honeycomb-like structure in the fluid passage area (7.2).

## Patentansprüche

1. Hahnanschluss, umfassend einen ersten Verbindungsabschnitt (2), der ausgelegt ist, um den Hahnanschluss (1) mit einem Hahn (10) und einen zweiten Verbindungsabschnitt (3), der einen Fluidauslass (5) bildet, zu verbinden, wobei der zweite Verbindungsabschnitt (3) ausgelegt ist, um einen Schlauchanschluss aufzunehmen, wobei ein Dichtungselement (7) innerhalb des ersten Verbindungsabschnitts (2) vorgesehen ist, um eine flüssigkeitsdichte Verbindung zwischen dem Hahnanschluss (1) und einem Hahn (10) zu erhalten, wobei das Dichtungselement (7) einen Dichtungsbereich (7.1) und einen Fluiddurchgangsbereich (7.2) umfasst , der eine oder mehrere Leisten (7.3) umfasst, wobei die Leisten (7.3) den Fluiddurchgangsbereich (7.2) segmentieren, um einen fokussierten Flüssigkeitsstrom am Fluidauslass (5) bereitzustellen,
**dadurch gekennzeichnet, dass**
das Dichtungselement (7) ein integral geformtes Dichtungselement ist, das ein Spritzguss- oder Stanzelement ist.

2. Hahnanschluss nach Anspruch 1, wobei das Dichtungselement (7) nach einem 1K-Herstellungsverfahren hergestellt wird, wobei die Leisten (7.3) sowie der Dichtungselementabschnitt im Dichtungsbereich (7.1) ein elastisches Material umfassen.

3. Hahnanschluss nach Anspruch 1, wobei das Dichtungselement (7) unter Verwendung eines 2K-Herstellungsverfahrens hergestellt wird, wobei die Leisten (7.3) ein steiferes Material als der Dichtungselementabschnitt im Dichtungsbereich (7.1) umfassen.

4. Hahnanschluss nach einem der vorhergehenden Ansprüche, wobei das Dichtungselement (7) ausgelegt ist, um von einem ringförmigen Abschnitt (6) getragen zu werden, wobei der ringförmige Abschnitt (6) den ersten Verbindungsabschnitt (2) mit dem zweiten Verbindungsabschnitt (3) verbindet.

5. Hahnanschluss nach einem der vorhergehenden Ansprüche, wobei das Dichtungselement (7) die gleiche Höhe im Fluiddurchgangsbereich (7.2) und im Dichtungsbereich (7.1) umfasst.

6. Hahnanschluss nach einem der Ansprüche 1 bis 4, wobei das Dichtungselement (7) eine gestufte Form umfasst, wobei der Fluiddurchgangsbereich (7.2) eine größere Höhe als der Dichtungsbereich (7.1) umfasst.

7. Hahnanschluss nach einem der vorhergehenden Ansprüche, wobei das Dichtungselement (7) eine Manschette (7.4) umfasst, wobei die Manschette (7.4) den Fluiddurchgangsbereich (7.2) umgibt und in Richtung des Fluidauslasses (5) vorsteht.

8. Hahnanschluss nach einem der vorhergehenden Ansprüche, wobei die eine oder die mehreren Leisten (7.3) seitlich aus einer Dichtungselementwand (7.6) vorstehen, wobei die Dichtungselementwand (7.6) den Fluiddurchgangsbereich (7.2) in Umfangsrichtung begrenzt.

9. Hahnanschluss nach einem der vorhergehenden Ansprüche, wobei die eine oder die mehreren Leisten (7.3) eine planare Form umfassen.

10. Hahnanschluss nach einem der vorhergehenden Ansprüche, wobei das Dichtungselement (7) zwei oder mehr Leisten (7.3) umfasst, wobei die Leisten (7.3) gleichmäßig über den Umfang des Fluiddurchgangsbereichs (7.2) verteilt sind.

11. Hahnanschluss nach einem der vorhergehenden Ansprüche, wobei die eine oder die mehreren Leisten (7.3) radial aus einer Dichtungselementwand (7.5) vorstehen, die den Fluiddurchgangsbereich (7.2) begrenzt.

12. Hahnanschluss nach einem der vorhergehenden Ansprüche 1 bis 10, wobei die eine oder die mehreren Leisten (7.3) aus einer Dichtungselementwand (7.5) vorstehen, die den Fluiddurchgangsbereich (7.2) so begrenzt, dass die Leiste (7.3) und eine Tangente (t) am Ursprung der Leiste (7.3) einen spitzen Winkel (α) begrenzen.

13. Hahnanschluss nach einem der vorhergehenden Ansprüche, wobei die eine oder die mehreren Leisten (7.3) eine Breite (w) umfassen, die kleiner ist als der Radius (r) des Fluiddurchgangsbereichs (7.2).

14. Hahnanschluss nach einem der vorhergehenden Ansprüche 1 bis 11, wobei die eine oder die mehreren Leisten (7.3) radial aus einer den Fluiddurchgangsbereich (7.2) begrenzenden Dichtungselementwand (7.5) vorstehen und in der Mitte des Fluiddurchgangsbereichs (7.2) verbunden sind.

15. Hahnanschluss nach einem der vorhergehenden Ansprüche 1 bis 8, wobei die Stäbe (7.3) im Fluiddurchgangsbereich (7.2) ein Gitter oder eine wabenartige Struktur bilden.

## Revendications

1. Raccord de robinet comprenant une première partie de couplage (2) adaptée pour coupler le raccord de robinet (1) avec un robinet (10) et une deuxième partie de couplage (3) formant une sortie de liquide (5), ladite deuxième partie de couplage (3) étant adaptée pour recevoir un raccord pour tuyau flexible ou, dans lequel un élément d'étanchéité (7) est fourni à l'intérieur de la première partie de couplage (2) afin d'obtenir une connexion étanche aux liquides entre le raccord de robinet (1) et un robinet (10), au moyen de laquelle l'élément d'étanchéité (7) comprend une zone d'étanchéité (7.1) et une zone de passage pour fluides (7.2) contenant une ou plusieurs barres (7.3), lesdites barres (7.3) répartissant en segments ladite zone de passage pour fluides (7.2) afin de fournir un flux liquide concentré en correspondance de la sortie de liquide (5),
**caractérisé en ce que**
ledit élément d'étanchéité (7) est un élément d'étanchéité formé de façon solidaire et un élément moulé par injection ou perforé.

2. Raccord de robinet selon la revendication 1, dans lequel l'élément d'étanchéité (7) est fabriqué en utilisant un procédé de fabrication 1K, au moyen duquel les barres (7.3) ainsi que la partie de l'élément d'étanchéité dans la zone d'étanchéité (7.1) comprennent un matériau élastique.

3. Raccord de robinet selon la revendication 1, dans lequel l'élément d'étanchéité (7) est fabriqué en utilisant un procédé de fabrication 2K, au moyen duquel les barres (7.3) comprennent un matériau plus rigide que la partie de l'élément d'étanchéité dans la zone d'étanchéité (7.1).

4. Raccord de robinet selon l'une quelconque des revendications précédentes, dans lequel l'élément d'étanchéité (7) est adapté pour être supporté par une partie annulaire (6), ladite partie annulaire (6) reliant la première partie de couplage (2) à la deuxième partie de couplage (3).

5. Raccord de robinet selon l'une quelconque des revendications précédentes, dans lequel l'élément d'étanchéité (7) comprend la même hauteur dans la zone de passage pour fluides (7.2) et la zone d'étanchéité (7.1).

6. Raccord de robinet selon l'une quelconque des revendications 1 à 4, dans lequel l'élément d'étanchéité (7) possède une forme en gradins, la zone de passage pour fluides (7.2) comprenant une hauteur supérieure à la zone d'étanchéité (7.1).

7. Raccord de robinet selon l'une quelconque des revendications précédentes, dans lequel l'élément d'étanchéité (7) comprend une collerette (7.4), ladite collerette (7.4) entourant la zone de passage pour fluides (7.2) et faisant saillie vers la sortie de liquide (5).

8. Raccord de robinet selon l'une quelconque des revendications précédentes, dans lequel lesdites une ou plusieurs barres (7.3) font saillie latéralement d'une paroi de l'élément d'étanchéité (7.6), ladite paroi de l'élément d'étanchéité (7.6) délimitant de façon circonférentielle la zone de passage pour fluides (7.2).

9. Raccord de robinet selon l'une quelconque des revendications précédentes, dans lequel lesdites une ou plusieurs barres (7.3) comprennent une forme plane.

10. Raccord de robinet selon l'une quelconque des revendications précédentes, ledit élément d'étanchéité (7) comprenant deux ou plusieurs barres (7.3), lesdites barres (7.3) étant régulièrement réparties à travers la circonférence de la zone de passage pour fluides (7.2).

11. Raccord de robinet selon l'une quelconque des revendications précédentes, dans lequel lesdites une ou plusieurs barres (7.3) font saillie de façon radiale d'une paroi de l'élément d'étanchéité (7.5) délimitant la zone de passage pour fluides (7.2).

12. Raccord de robinet selon l'une quelconque des revendications 1 à 10, dans lequel les une ou plusieurs barres (7.3) font saillie d'une paroi de l'élément d'étanchéité (7.5) délimitant la zone de passage pour fluides (7.2) de sorte que la barre (7.3) et une tangente (t) en correspondance de l'origine de ladite barre (7.3) délimitent un angle aigu (α).

13. Raccord de robinet selon l'une quelconque des revendications précédentes, dans lequel lesdites une ou plusieurs barres (7.3) comprennent une largeur (w) inférieure au rayon (r) de la zone de passage pour fluides (7.2).

14. Raccord de robinet selon l'une quelconque des revendications 1 à 11, dans lequel lesdites une ou plusieurs barres (7.3) font saillie de façon radiale d'une paroi de l'élément d'étanchéité (7.5) délimitant la zone de passage pour fluides (7.2) et sont couplées au centre de ladite zone de passage pour fluides (7.2).

15. Raccord de robinet selon l'une quelconque des revendications 1 à 8, dans lequel lesdites barres (7.3) forment une grille ou une structure en nid d'abeilles dans la zone de passage pour fluides (7.2).
